# EUROPEAN PATENT APPLICATION

(11) **EP 4 470 800 A1**
(43) Date of publication of application: **04.12.2024**
(21) Application number: 24171678.6
(22) Date of filing: 22.04.2024
(51) Int. Cl.: B60C 19/00, B60C 15/06, B60C 5/14, G06K 19/077, H01Q 1/22

(54) **PNEUMATIC TIRE**

(30) Priority: 31.05.2023 JP 2023090117
(71) Applicant: Sumitomo Rubber Industries, Ltd., Kobe-shi, Hyogo 651-0072 (JP)
(72) Inventor: ITO, Sho, Kobe-shi, 651-0072 (JP)
(74) Representative: Manitz Finsterwald Patent- und Rechtsanwaltspartnerschaft mbB

(57) **Abstract**

The pneumatic tire comprises a tread portion 2, a pair of sidewall portions 3 and a pair of bead portions 4. At least one of the bead portions 4 is provided with at least one electronic component 20, a bead apex rubber 8 extending radially outwardly from a bead core 5, and a bead reinforcing layer 15 extending in the tire radial direction along the bead apex rubber 8. The bead reinforcing layer 15 comprises a steel cord ply 16 having a spliced portion 17 where both circumferential end portions thereof are overlap-jointed. The electronic component 20 is arranged away from the spliced portion 17 in the tire circumferential direction, and located within the arranged range in the tire radial direction of the steel cord ply 16.

## Description

### Technical field

The present invention relates to a pneumatic tire.

### Background art

Patent Document 1 listed below discloses a pneumatic tire provided with an RFID chip disposed inside the tire.
Patent Document 2 listed below discloses a pneumatic tire in which a bead reinforcing layer of steel cords is provided in the bead portion. The bead reinforcing layer can increase the stiffness of the bead portion, therefore, it is helpful for improving durability and steering stability of the tire.

### [Prior art document]

### [Patent Documents]

Patent Document 1: Japanese Patent Application Publication No. 2011-195046
Patent Document 2: Japanese Patent Application Publication No. 2022-158301

### Summary of the Invention

### Problems to be solved by the Invention

In a tire having a bead reinforcing layer as disclosed in Patent Document 2, if an electronic component such as an RFID chip or tag is disposed at a position on the outside in the tire radial direction of the bead reinforcing layer, as the deformation or deflection of the tire during running is relatively large at such position, durability of the electronic component is liable to be deteriorated.

On the other hand, in an electronic component such as RFID chip that communicates using radio waves with an external reader, there is a possibility of communication failure with the reader depending on the position in relation to other metal members.

The present invention was therefore, made in view of the above-mentioned circumstances, and
a primary objective of the present invention is to provide a pneumatic tire capable of improving steering stability, while preventing communication failure and durability deterioration of the electronic component used in the tire.

### Means for solving the Problems

According to the present invention, a pneumatic tire comprises a tread portion, a pair of sidewall portions and a pair of bead portions each with a bead core embedded therein, wherein
at least one of the bead portions is provided with:
   at least one electronic component;
   a bead apex rubber extending outward in the tire radial direction from the bead core embedded therein; and
   a bead reinforcing layer extending in the tire radial direction along the bead apex rubber,
the bead reinforcing layer comprises at least one steel cord ply made of rubber-coated steel cords and having a spliced portion in which both end portions in the tire circumferential direction thereof are lap jointed with each other, and
the electronic component is disposed within a region in the tire radial direction in which the steel cord ply is located, and at a position away from the spliced portion in the tire circumferential direction.

### Effects of the Invention

By employing the above-described configuration, the pneumatic tire of the present invention can maintain durability and communication functions of the electronic component while improving the steering stability of the tire.

### Brief description of the Drawings

FIG. 1 is a cross-sectional view of a pneumatic tire as an embodiment of the present invention.
FIG. 2 is an enlarged schematic cross-sectional partial view showing the carcass and the inner liner layer of the tire.
FIG. 3 is a cross-sectional view of one of the bead portions of the tire.
FIG. 4 is an enlarged schematic perspective partial view of the steel cord ply of the bead reinforcing layer shown in FIG. 3.
FIG. 5 is an enlarged schematic perspective view of the electronic component shown in FIG. 3.
FIG. 6 is a diagram showing a side view of the bead reinforcing layer showing the spliced portion in relation to the position of the electronic component.
FIG. 7 is an enlarged schematic partial side view of the steel cord ply.

### Detailed description of the Invention

An embodiment of the present invention will now be described in detail in conjunction with accompanying drawings.

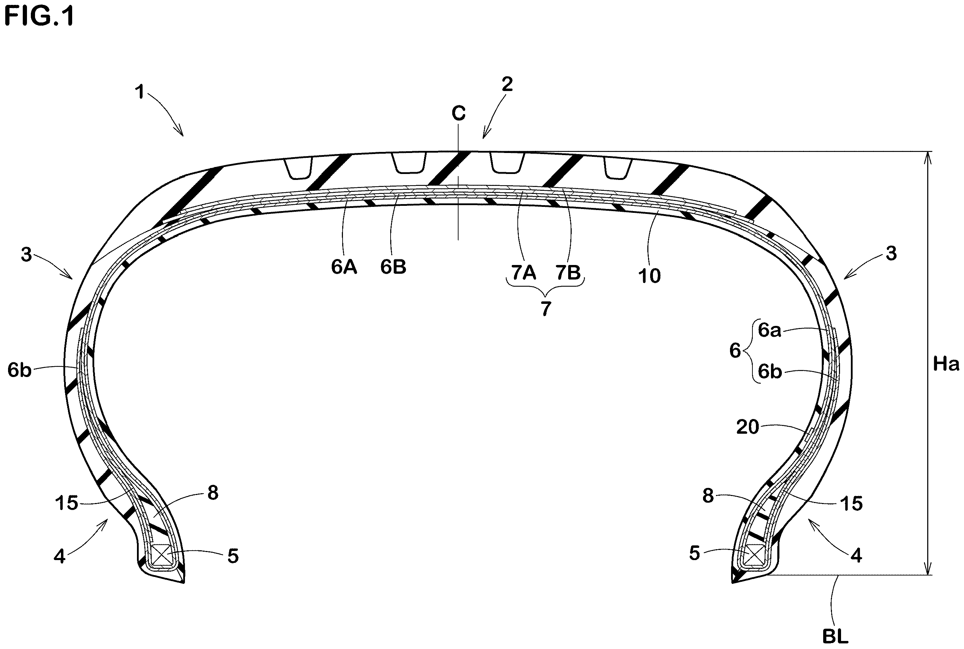

FIG. 1 is a cross-sectional view of a pneumatic tire 1 as embodiment of the present invention.
The present invention can be applied to pneumatic tires, especially suitably applied to passenger car tires.
In the present embodiment, the pneumatic tire 1 is for passenger cars.
FIG. 1 shows a meridian cross-section of the pneumatic tire 1 taken along a plane including the rotational axis of the tire when under a standard state of the tire.
Incidentally, the drawings may contain exaggerated expressions or different geometric expressions from the actualities.

In the case that, as in the present embodiment, the tire according to the present invention is a type of pneumatic tire for which various standards have been established, the standard state is a state of the tire which is mounted on a standard wheel rim and inflated to a standard pressure but loaded with no tire load.

The standard rim is a wheel rim specified for the tire in a standard system including standards on which the tire is based, for example, the "Standard rim" in JATMA, "Design Rim" in TRA, "Measuring Rim" in ETRTO,

The standard pressure is air pressure specified for the tire in a standard system including standards on which the tire is based, for example, the "maximum air pressure" in JATMA, "INFLATION PRESSURE" in ETRTO, and the maximum air pressure listed in the table "TIRE LOAD LIMITS AT VARIOUS COLD INFLATION PRESSURES" in TRA.

In the case that the tire according to the present invention is a tire for which various standards have not been established, the standard state means a standard usage state depending on the purpose of use of the tire and loaded with no tire load.

In this application including specification and claims, dimensions and positions of each part or portion of the tire refer to those measured under the standard state unless otherwise noted,

As shown in FIG. 1, the tire 1 has a tread portion 2, a pair of sidewall portions 3 and a pair of bead portions 4, and comprises a carcass 6 and an inner liner 10.
Each of the bead portions 4 is provided with a bead core 5 embedded therein.

The carcass 6 extends between the bead portions 4 through the tread portion 2 and the sidewall portions 3, and has a toroidal shape.
The carcass 6 in this example is turned up around the bead core 5 in each of the bead portions 4, therefore, the carcass 6 includes a pair of carcass turned-up portions 6b and a carcass main portion 6a therebetween.

Further, in this example, the carcass 6 is composed of two carcass plies 6A and 6B.
Furthermore, in this example, each of the two carcass plies 6A and 6B is turned up around the bead core 5 in each of the bead portions 4 from the axially inside to the axially outside of the tire to have a pair of carcass ply turned-up portions and a carcass ply main portion therebetween.

In the present invention, however, the carcass 6 is not limited to such a structure, and various structures may be employed.

The inner liner 10 extends between the bead portions 4 along the inner side of the carcass 6 in a toroidal shape.

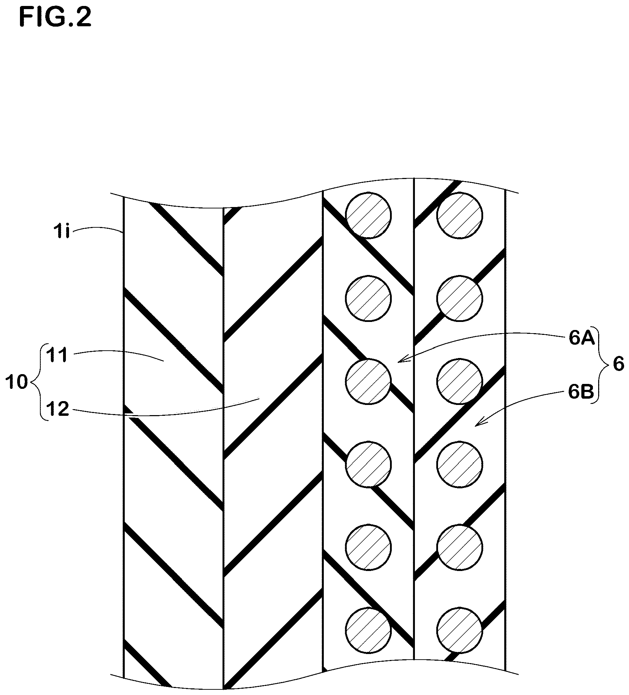

FIG. 2 shows an enlarged cross-sectional partial view schematically showing only the carcass 6 and the inner liner 10. Other members or components are omitted.

As shown in FIG. 2, the inner liner 10 in this example comprises two layers of different rubber compounds, for example, a butyl rubber layer 11 and an insulation rubber layer 12.
The butyl rubber layer 11 is disposed so as to form the inner surface 1i of the tire facing the tire cavity to provide the tire with an extremely low air permeability of butyl rubber so as to maintain the tire inflation pressure.
For that purpose, the butyl rubber layer 11 in this example contains 80% or more of butyl rubber or halogenated butyl rubber.

The insulation rubber layer 12 is disposed on the carcass 6 side of the butyl rubber layer 11, namely, between the carcass and the butyl rubber layer 11.
The insulation rubber layer 12 is made of rubber having higher adherence property to the carcass 6 than that of the butyl rubber layer 11. For that purpose, it is preferred that the insulation rubber layer 12 is made of an elastomer composition containing natural rubber or styrene-butadiene rubber. Further, it is preferable that the complex elastic modulus E* of the insulation rubber layer 12 is 2.5 to 5.5 MPa. Here, the complex elastic modulus E* is measured according to the Japanese Industrial standard (JIS) K6394 by using a viscoelastic spectrometer under the following conditions:
Initial strain: 10%
Strain amplitude: +/-2%
Frequency: 10Hz
Measuring temperature: 30 degrees C
Deformation mode: tensile.

In the present embodiment, as shown in FIG. 1, the tread portion 2 is provided, on the radially outside of the carcass 6, with a tread reinforcing belt 7 made of metallic belt cords.
The tread reinforcing belt 7 in this example is composed of two belt plies 7A and 7B. Each of the belt plies 7A and 7B is composed of belt cords arranged at an angle in a range from 15 to 45 degrees with respect to the tire circumferential direction. with respect to the tire circumferential direction, the belt cords of the belt ply 7A are inclined in one direction, and the belt cord of the belt ply 7B are inclined in one direction opposite to that of the belt ply 7A in order to effectively reinforce the tread portion 2.

In the present embodiment, each of the bead portions 4 is provided with
a bead apex rubber 8 extending radially outwardly from the bead core 5, and
a bead reinforcing layer 15 extending along the bead apex rubber 8.

According to the present invention, as shown in FIG. 1, at least one of the bead portions 4 is provided with at least one electronic component 20.

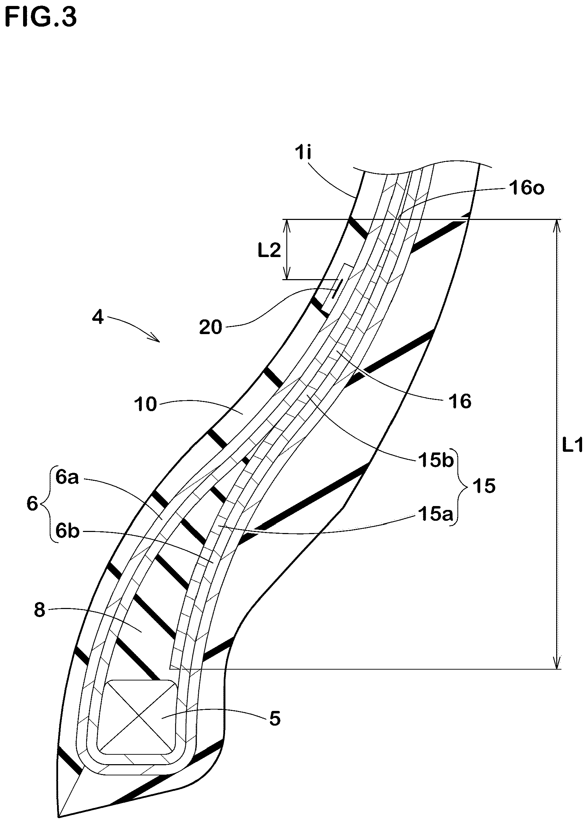

FIG. 3 shows one of the bead portions 4 which is provided with the at least one electronic component 20.

The bead apex rubber 8 extends radially outwardly from the bead core 5 in a tapered manner for example.
The bead apex rubber 8 is made of hard rubber, for example, having a type-A durometer hardness of 60 or more when measured at 23 degrees c according to the Japanese Industrial standard (JIS) K6253 by using a type-A durometer.

The bead reinforcing layer 15 comprises at least one reinforcing cord ply 16 made of steel cords covered with a topping rubber.
The bead reinforcing layer 15 in this example is composed of only one ply 16 of steel cords.
According to the present invention, the bead reinforcing layer 15 is not limited to such a single ply structure, and may be composed of a plurality of plies 16 made of steel cords or metal cords.
The bead reinforcing layer 15 extends around the entire circumference of the tire while being located in a position shown in FIG. 3.
The bead reinforcing layer 15 is for improving the durability of the bead portion 4 and also increasing the stiffness of the bead portion 4 to improve the steering stability on dry road surfaces as well as the durability of the tire.
Thus, it is preferable that the reinforcing cord ply 16 is a steel cord ply 16 because it does not easily generate heat even when the tire 1 is repeatedly deformed, and has a small effect on the rolling resistance of the tire.

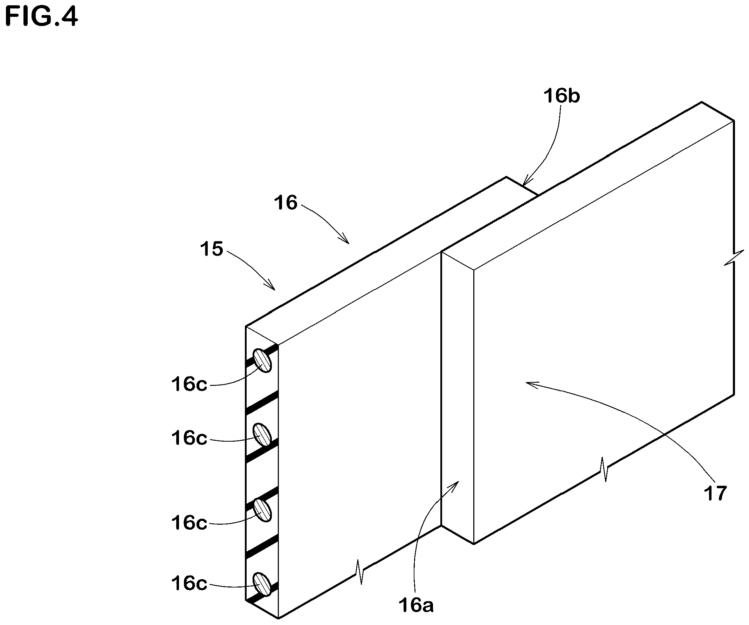

FIG. 4 shows an enlarged perspective view diagrammatically showing a spliced portion 17 of the steel cord ply 16 constituting the bead reinforcing layer 15.
In the spliced portion 17, as shown in FIG. 4, one end portion 16a and the other end portion 16b in the tire circumferential direction of the steel cord ply 16 are overlap-jointed with each other.
The spliced portion 17 in this example extends in a tire radial direction in parallel thereto with a constant width.
According to the present invention, however, the spliced portion 17 is not limited to this example, for example, may be inclined with respect to a tire radial direction, as well as may be formed to have a variable width.
Note that in FIGS. 1 and 3, there is shown the cross section at a position where the spliced portion 17 is not exist.

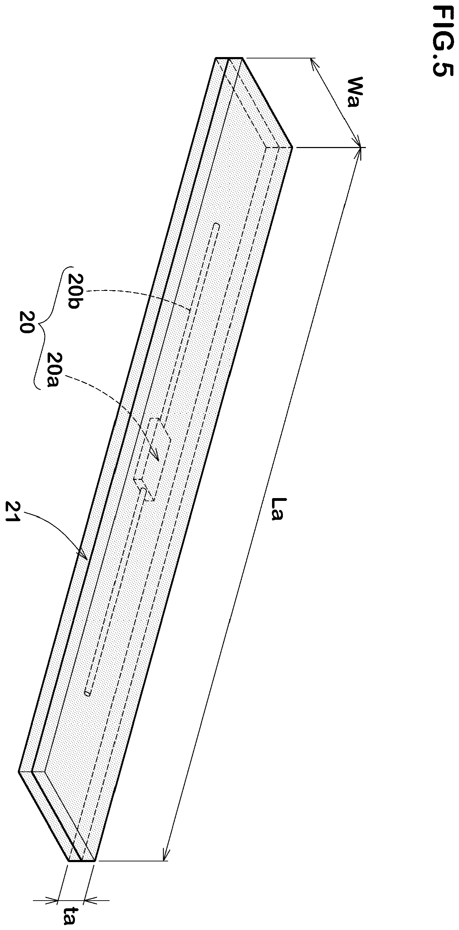

FIG. 5 is an enlarged perspective view diagrammatically showing the electronic component 20.
The electronic component 20 has communication functions that allow information to be exchanged by transmitting and receiving radio waves to and from a corresponding external reader. Specific examples of the electronic component 20 include, for example, a RFID tag, a pressure sensor, a temperature sensor, an acceleration sensor, a magnetic sensor and the like.
The electronic component 20 in the present embodiment is an RFID tag.
As shown in FIG. 5, the RFID tag is a small and lightweight electronic component composed of a metallic main body 20a containing an IC chip consisting of a transmitting/receiving circuit, a control circuit, a memory, etc., and an antenna 20b. when an RFID tag receives a radio wave as a query signal, the RFID tag, using this as electrical energy, transmits various data in its memory as a radio wave as a response to the query. As the RFID tag, various known and unknown RFID tags may be employed, therefore, detailed description thereof is omitted in this specification.

The electronic component 20 in this example is covered with a covering rubber 21.
For the covering rubber 21, a rubber compound having excellent adhesiveness is appropriately employed.
As shown in FIG. 5, the covering rubber 21 has a length La in a range from 45 to 70 mm, for example.
The covering rubber 21 has a width wa in a range from 8 to 15 mm, for example.
The covering rubber 21 has a thickness ta in a range from of 2 to 3 mm, for example.
The electronic component 20 has smaller dimensions than the covering rubber 21 so that the entire electronic component 20 is covered therewith.

As shown in FIG. 3, the electronic component 20 is located within a range in the tire radial direction of the bead reinforcing layer 15 or the steel cord ply 16 in this example.
In other words, if the electronic component 20A and the steel cord ply 16 are projected parallel to the tire axial direction onto a plane parallel to the tire equatorial plane C, the electronic component 20 completely overlaps with the steel cord ply 16.

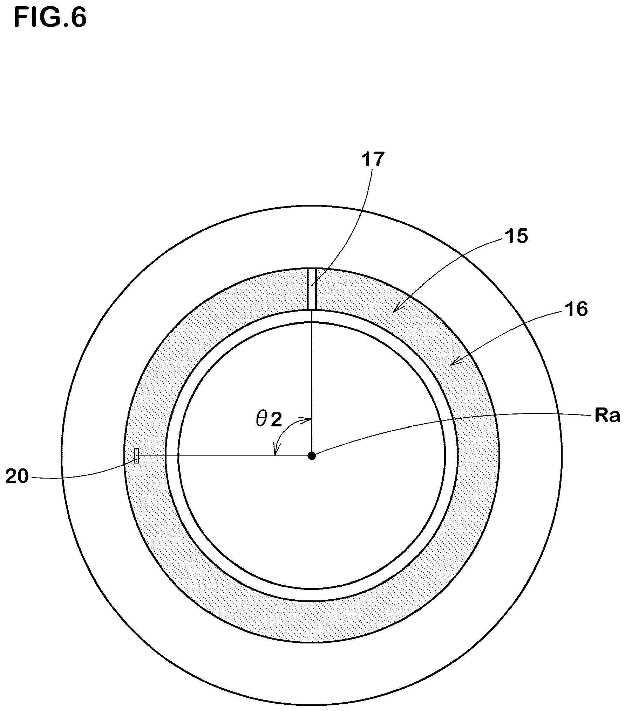

FIG. 6 is a diagram schematically showing a side view of the bead reinforcing layer 15 viewed in the tire axial direction. In FIG. 6, the bead reinforcing layer 15 is shown as an annular zone which is shaded with fine dots except for the spliced portion 17.
According to the present invention, the electronic component 20 is disposed away from the spliced portion 17 in the tire circumferential direction as shown in FIG. 6.
Thereby, it is possible to maintain the communication functions of the electronic component while improving the steering stability and preventing the durability of the electronic component from being impaired. The reason is as follows.

In the tire 1 according to the present invention, the bead portion 4 is provided with the bead reinforcing layer 15 as shown in FIG. 3, therefore, the steering stability can be improved. Further, a portion of the tire where the bead reinforcing layer 15 or the steel cord ply 16 is disposed, is increased in stiffness.
on the other hand, the electronic component 20 is located within the range in the tire radial direction where the bead reinforcing layer 15 is disposed, therefore, since deformation of the bead portion 4 around the electronic component 20 is suppressed, the durability of the electronic component is not impaired.

On the other hand, as shown in FIG. 4, the spliced portion 17 of the steel cord ply 16 where the both end portions thereof are overlapped, has about twice the amount of the steel cords 16c as compared to other portion, namely, the amount of metal in the bead reinforcing layer 15 is relatively large in the spliced portion 17. Therefore, if the electronic component 20 is located adjacently to the spliced portion 17, it is liable to cause radio wave interference when the electronic component 20 communicates with an external reader.
In contrast, according to the present invention, as shown in FIG. 6, the electronic component 20 is located away from the spliced portion 17 in the tire circumferential direction, therefore, the above-mentioned problems can be suppressed, and the communication functions of the electronic component 20 are maintained well in the present invention.

Hereinafter, the present embodiment will be described in more detail.

In the present embodiment, as shown in FIG. 3, the bead reinforcing layer 15 is disposed on the axially outer side of the main portion 6a of the carcass 6. Further, the bead reinforcing layer 15 has a portion located on the axially outer side of the bead apex rubber 8. As a result, the bead reinforcing layer 15 in this example comprises
a first portion 15a sandwiched between the bead apex rubber 8 and the turned-up portions 6b of the carcass 6, and a second portion 15b sandwiched between the main portion 6a of the carcass 6 and the turned-up portion 6b of the carcass 6. such bead reinforcing layer 15 can supplement the stiffness of a part of the bead portion where the bead apex rubber 8 does not exist, so the entire bead portion 4 is effectively reinforced.

In the bead reinforcing layer 15 in this example, the radially inner end thereof is slightly spaced apart from the bead core 5 as shown in FIG. 3. such arrangement is preferred in that it is possible to suppress transmission of impact caused during rim mounting operation to the bead reinforcing layer 15. The present invention is however not limited to such arrangement.

The dimension L1 in the tire radial direction of the bead reinforcing layer 15 is preferably in a range from 20% to 40% of the cross-sectional height Ha of the tire 1 (shown in FIG. 1).
The cross-section height Ha corresponds to the distance in the tire radial direction from the bead baseline BL to the radially outermost position of the tire 1.
The bead baseline BL means a straight line parallel to the tire axial direction passing through the radial position corresponding to the rim diameter of the standard rim.
when the dimension L1 of the bead reinforcing layer 15 varies in the tire circumferential direction, the above-mentioned range from 20% to 40% may be applied to the average value of the dimension L1.

In the steel cord ply 16 of the bead reinforcing layer 15, the cord count of the steel cords is, for example, set in a range from 30 to 50 cords per 5cm ply width, preferably 35 to 45 cords per 5cm ply width so as to reliably reinforce the bead portion 4, while suppressing an excessive increase in tire weight.

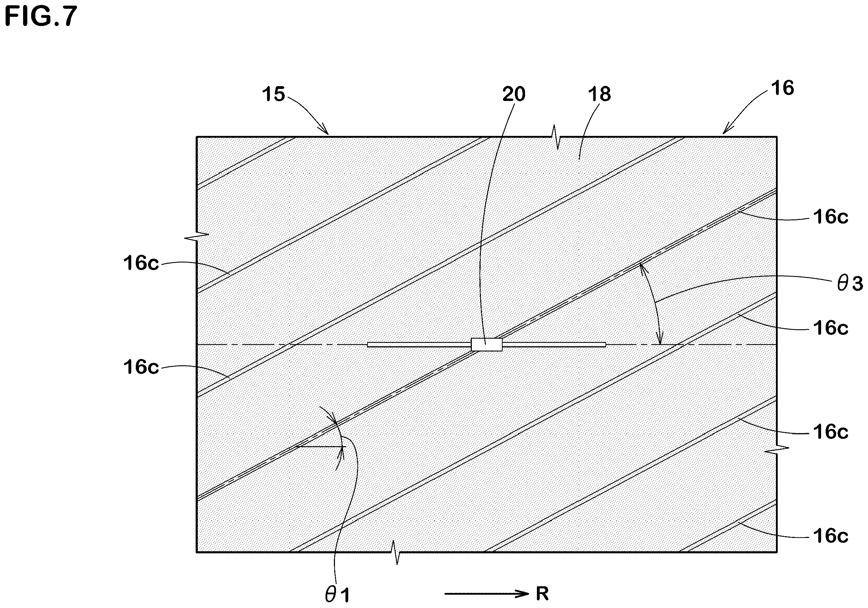

FIG. 7 is a schematic view of the steel cord ply 16 viewed in the thickness direction of the ply, conceptually showing the arrangement of the steel cords 16c.
In FIG. 7, shaded with fine dots is the topping rubber 18 covering the steel cords 16c.
As shown in FIG. 7, the steel cords 16c are arranged at an angle 01 in a range from 10 to 30 degrees with respect to the tire circumferential direction R in order to suppress deformation of the bead portion 4 in the tire circumferential direction and improve the steering stability.

As shown in FIG. 3, the electronic component 20 is disposed axially inside the bead reinforcing layer 15.
This makes it difficult for stress to be applied to the electronic component 20 when the bead portion 4 is deformed, and thereby the durability of the electronic component 20 is not impaired.
Preferably, the electronic component 20 is disposed axially inside the main portion 6a of the carcass 6.
In the present embodiment, the electronic component 20 is disposed between the main portion 6a of the carcass 6 and the inner liner 10.
More specifically, the electronic component 20 is disposed between the main portion 6a of the carcass 6 and the insulation rubber layer 12 of the inner liner 10. (In FIG. 3, the boundary between the butyl rubber layer 11 and the insulation rubber layer 12 is omitted.)
In the present invention, however, the arrangement position of the electronic component 20 is not limited to that in the present embodiment, and
the electronic component 20 may be disposed in the interior portion of insulation rubber layer 12 or on the inner surface 1i of the tire facing the tire cavity.
such arrangement positions ensure that the durability and communication functions of the electronic component 20 are maintained.
Further, such arrangement positions for the electronic component 20 also help to reduce the defective rate during manufacturing the tires.

Further, the electronic component 20 is preferably disposed radially outside the center position in the tire radial direction of the bead reinforcing layer 15.
This ensures a sufficient distance between the electronic component 20 and the metal components such as the bead core 5 and the rim flange (not shown), and the communication functions of the electronic component 20 are more reliably maintained. Further, it is preferable that the distance L2 in the tire radial direction from the electronic component 20 to the radially outer edge 16o of the steel cord ply 16 is not more than 20 mm.
Thereby, the above-mentioned effects can be obtained while maintaining the durability of the electronic component 20.
More specifically, the distance L2 corresponds to the distance in the tire radial direction from the radially outer end of the main body 20a (shown in FIG. 5) of the electronic component 20 to the radially outer edge 16o of the steel cord ply 16.

It is preferable that the electronic component 20 is positioned at a location away from the spliced portion 17 by an angle θ2 of from 30 to 180 degrees in terms of an angle between the spliced portion 17 and the electronic component 20 around the tire rotational axis Ra as shown in FIG. 6.
Thereby, the durability and communication functions of the electronic component 20 can be maintained certainly.
when the spliced portion 17 is inclined with respect to the tire radial direction,
the angle θ2 is defined between
an imaginary straight line extending from the center of gravity of the electronic component 20 to the tire rotational axis Ra, and
an imaginary straight line extending from the center position in the tire radial direction of the spliced portion 17 to the tire rotational axis Ra.

The electronic component 20 has a longitudinal direction which is parallel with the dimension La line in FIG. 5, and parallel with the arrowed line R in FIG. 7.
In this example, the longitudinal direction of the electronic component 20 is the direction in which a pair of elements of the antenna 20b protrude from the main body 20a.

As shown in FIG. 7, the longitudinal direction of the electronic component 20 extends along the tire circumferential direction.
on the other hand, in a portion of the steel cord ply 16 around the electronic component 20, the steel cords 16c extend in the same direction.
It is preferable that the angle θ3 between
the longitudinal direction of the electronic component 20, and the extending direction of the steel cords 16c is not less than 10 degrees, more preferably not less than 25 degrees, but not more than 45 degrees, more preferably not more than 35 degrees.

If the angle θ3 is small, the radio waves that should be received by the electronic component 20 are likely to be absorbed by the steel cords 16c, and the communication functions of the electronic component 20 may be degraded.
On the other hand, if the angle θ3 is large, stress is likely to be applied to the electronic component 20 when the bead reinforcing layer 15 is bent, which may impair the durability of the electronic component 20.
In this embodiment, by setting the angle θ3 within the above range, it becomes possible to ensure a good balance between the communication functions and the durability of the electronic component 20.

In the case where the electronic component 20 has a bent shape, the longitudinal direction of the electronic component 20 is defined by a straight line drawn between both ends of the electronic component 20.

The extending direction of the steel cords 16c corresponds to the average in orientation of portions of the steel cords 16c which portions exist around the electronic component 20 (for example, the portions existing in a circular zone of 5cm radius centered on the electronic component 20). This average can be determined, for example, by calculating the average of the angles of the respective portions of the steel cords with respect to the tire circumferential direction.
More specifically, the average of the angles can be determined by, for example,
equally dividing each of the portions into minute regions, obtaining the angles of the respective minute regions with respect to the tire circumferential direction,
adding up the obtained angles, and
dividing the added-up total by the number of the minute regions.

while detailed description has been made of a preferable embodiment of the present invention, the present invention can be embodied in various forms without being limited to the illustrated embodiment.

### Comparison tests

Based on the structure shown in FIG. 1, pneumatic tires of size 265/65R18 (Rim size: 18x7.5) for passenger cars were experimentally manufactured as test tires (Example tires Ex.1-Ex.7 according to the present invention and Comparative Example tires Ref.1 and Ref.2).

In the comparative Example tire Ref.1, the bead reinforcing layers were not provided. In the comparative Example tire Ref.2, the electronic component was placed at a circumferential position in the spliced portion. Otherwise, the Comparative Example tires were substantially the same as the Example tires.

Specifications of the test tiers are shown in Table 1.

The test tires were tested for the steering stability, durability of the electronic component, and communication functions of the electronic component as follows.

### < steering stability test >

using a test car (3500cc 4WD vehicle) with test tires mounted on wheel rims of size 18x7.5 and inflated to 250 kPa, a test driver evaluated the steering stability when running on a dry road surface of a test course.
The results are indicated in Table 1, wherein the higher the score, the better the steering stability.

### < Durability test >

using a drum-type tire test machine, each test tire mounted on the 18x7.5 rim and inflated to 250 kPa was run at a constant speed under a constant tire load, and measured for the distance traveled until the electronic component lose its communication functions.
The results are indicated in Table 1 by an index obtained by converting the distance traveled, wherein the larger the value, the better the durability of the electronic component.

### < communication function test >

using the test tire in resting state, there was measured the maximum distance at which radio waves could be exchanged between the electronic component and an external reader.
The results are indicated in Table 1 by an index obtained by converting the maximum distance, wherein the larger the numerical value, the greater the maximum distance, namely, indicating the communication functions of the electronic component being maintained in the more excellent state.

**Table 1**

| Tire | Ref. 1 | Ref.2 | Ex.1 | Ex.2 | Ex.3 |
|---|---|---|---|---|---|
| [P]resence or [A]bsence of Bead reinforcing layer | [A] | [P] | [P] | [P] | [P] |
| Angle θ2 between Electronic component and Spliced portion (deg.) | - | 0 | 180 | 30 | 70 |
| Angle θ3 between Electronic component and Steel cords (deg.) | - | 30 | 30 | 30 | 30 |
| Distance L2 from Electronic component to Steel cord ply outer edge (mm) | - | 10 | 10 | 10 | 10 |
| Steering stability (rating) | 20 | 30 | 30 | 30 | 30 |
| Durability of Electronic component (index) | 20 | 30 | 30 | 30 | 30 |
| Communication function of Electronic component (index) | 20 | 7 | 20 | 14 | 16 |
| | | | | | |

| Tire | Ex.4 | Ex.5 | Ex.6 | Ex.7 | |
|---|---|---|---|---|---|
| [P]resence or [A]bsence of Bead reinforcing layer | [P] | [P] | [P] | [P] | |
| Angle θ2 between Electronic component and Spliced portion (deg.) | 120 | 180 | 180 | 180 | |
| Angle θ3 between Electronic component and Steel cords (deg.) | 30 | 30 | 10 | 45 | |
| Distance L2 from Electronic component to Steel cord ply outer edge (mm) | 10 | 30 | 10 | 10 | |
| Steering stability (rating) | 30 | 30 | 30 | 30 | |
| Durability of Electronic component (index) | 30 | 30 | 32 | 25 | |
| Communication function of Electronic component (index) | 18 | 14 | 13 | 20 | |

As shown in Table 1, as compared to comparative Example tire Ref.1, the Example tires Ex.1-Ex.7 and the comparative Example tire Ref.2 each equipped with the bead reinforcing layer, were improved in steering stability and durability of the electronic component

On the other hand, in the comparative Example tire Ref.2 whose electronic component was deposed at the same circumferential position as that of the spliced portion, the communication functions of the electronic component were significantly degraded, but, in the Example tires Ex.1-Ex.7, the communication functions were at 13 to 20 points and thus reliably maintained.

Thus, it was confirmed that the example tires were improved in steering stability while maintaining the durability and communication functions of the electronic component.

### Statement of the present invention

The present Invention is as follows.

Present Invention 1: A pneumatic tire comprising:
a tread portion;
a pair of sidewall portions; and
a pair of bead portions each with a bead core embedded therein,
wherein
at least one of the bead portions is provided with
   at least one electronic component,
   a bead apex rubber extending radially outwardly from the bead core, and
   a bead reinforcing layer extending in the tire radial direction along the bead apex rubber,
the bead reinforcing layer comprises a steel cord ply in which a plurality of steel cords are rubber-coated;
the steel cord ply has a spliced portion in which one end portion and the other end portion of the steel cord ply in the tire circumferential direction are overlap-jointed, and
the electronic component is disposed within a region in the tire radial direction in which the steel cord ply is located, and at a position away from the spliced portion in the tire circumferential direction.

Present Invention 2: The pneumatic tire according to Present Invention 1, wherein the electronic component is spaced apart from the spliced portion by an angle in a range from 30 to 180 degrees around the tire rotational axis.

Present Invention 3: The pneumatic tire according to Present Invention 1 or 2, wherein the bead reinforcing layer is located outside the bead apex rubber in the tire axial direction, and the electronic component is located inside the bead reinforcing layer in the tire axial direction.

Present Invention 4: The pneumatic tire according to Present Invention 1, 2 or 3, which comprises:
a toroidal carcass extending between the bead cores in the bead portions; and
a toroidal inner liner layer extending between the bead portions along the inner side of the carcass,
the inner liner layer comprises
   a butyl rubber layer disposed on the tire inner cavity side, and
   an insulation rubber layer disposed on the carcass side,
the insulation rubber layer has a higher adhesive force to the carcass than the butyl rubber layer,
   the electronic component is disposed
between the carcass and the insulation rubber layer, or inside the insulation rubber layer, or
on the inner cavity surface of the tire.

Present Invention 5: The pneumatic tire according to Present Invention 4, wherein the insulation rubber layer has a complex modulus of elasticity E* of 2.5 to 5.5 MPa.

Present Invention 6: The pneumatic tire according to any one of Present Inventions 1 to 5, wherein a distance in the tire radial direction from the electronic component to the outer edge in the tire radial direction of the steel cord ply is not more than 20 mm.

Present Invention 7: The pneumatic tire according to any one of Present Inventions 1 to 6, wherein the steel cord ply comprises 30 to 50 steel cords per 5cm ply width.

Present Invention 8: The pneumatic tire according to any one of Present Inventions 1 to 7, wherein the plurality of steel cords are each arranged at an angle in a range from 10 to 30 degrees with respect to the tire circumferential direction.

Present Invention 9: The pneumatic tire according to any one of Present Inventions 1 to 8, wherein the electronic component has its longitudinal direction,
the plurality of steel cords are arranged in mutually same extending directions, and
angles between the longitudinal direction of the electronic component and the extending directions of the plurality of steel cords are in a range from 10 to 45 degrees.

### Description of the reference signs

- 2: Tread portion
- 3: sidewall portion
- 5: Bead core
- 4: Bead portion
- 8: Bead apex rubber
- 15: Bead reinforcing layer
- 16: steel cord ply
- 16c: steel cord
- 17: spliced portion
- 20: Electronic component

## Claims

1. A pneumatic tire comprises:
a tread portion;
a pair of sidewall portions; and
a pair of bead portions each with a bead core embedded therein,
wherein
at least one of the bead portions is provided with
at least one electronic component,
a bead apex rubber extending radially outwardly from the bead core, and
a bead reinforcing layer extending in the tire radial direction along the bead apex rubber,
the bead reinforcing layer comprises a steel cord ply in which a plurality of steel cords are rubber-coated;
the steel cord ply has a spliced portion in which one end portion and the other end portion of the steel cord ply in the tire circumferential direction are overlap-jointed, and
the electronic component is disposed within a region in the tire radial direction in which the steel cord ply is located, and at a position away from the spliced portion in the tire circumferential direction.

2. The pneumatic tire according to claim 1, wherein
the electronic component is spaced apart from the spliced portion by an angle in a range from 30 to 180 degrees around the tire rotational axis.

3. The pneumatic tire according to claim 1 or 2, wherein
the bead reinforcing layer is located outside the bead apex rubber in the tire axial direction, and
the electronic component is located inside the bead reinforcing layer in the tire axial direction.

4. The pneumatic tire according to claim 1, 2 or 3, which comprises:
a toroidal carcass extending between the bead cores in the bead portions; and
a toroidal inner liner layer extending between the bead portions along the inner side of the carcass,
the inner liner layer comprises
a butyl rubber layer disposed on the tire inner cavity side, and an insulation rubber layer disposed on the carcass side,
the insulation rubber layer has a higher adhesive force to the carcass than the butyl rubber layer,
the electronic component is disposed
between the carcass and the insulation rubber layer, or
inside the insulation rubber layer, or
on the inner cavity surface of the tire.

5. The pneumatic tire according to claim 4, wherein
the insulation rubber layer has a complex modulus of elasticity E* of 2.5 to 5.5 MPa.

6. The pneumatic tire according to any one of claims 1 to 5, wherein
a distance in the tire radial direction from the electronic component to the outer edge in the tire radial direction of the steel cord ply is not more than 20 mm.

7. The pneumatic tire according to any one of claims 1 to 6, wherein
the steel cord ply comprises 30 to 50 steel cords per 5cm ply width.

8. The pneumatic tire according to any one of claims 1 to 7, wherein
the plurality of steel cords are each arranged at an angle in a range from 10 to 30 degrees with respect to the tire circumferential direction.

9. The pneumatic tire according to any one of claims 1 to 8, wherein
the electronic component has its longitudinal direction,
the plurality of steel cords are arranged in mutually same extending directions, and
angles between the longitudinal direction of the electronic component and the extending directions of the plurality of steel cords are in a range from 10 to 45 degrees.
